# EUROPEAN PATENT SPECIFICATION

(11) **EP 0 647 500 B1**
(45) Date of publication and mention of the grant of the patent: **11.11.1998**
(21) Application number: 94306630.8
(22) Date of filing: 09.09.1994
(51) Int. Cl.: B23P 19/00, B65G 47/14

(54) **Headed rod member aligning and supplying apparatus**
Vorrichtung zum Ausrichten und Speisen von Stäben mit Kopf
Dispositif pour alimenter et aligner des tiges avec tête

(30) Priority: 10.09.1993 JP 49338/93
(43) Date of publication of application: 12.04.1995
(73) Proprietor: EMHART INC., Newark, Delaware 19711 (US)
(72) Inventor: Sakota, Kanji, Toyohashi-Shi Aichi-Ken (JP)
(74) Representative: Stagg, Diana Christine

(56) References cited:
- EP-A- 0 057 103
- EP-A- 0 268 462
- FR-A- 2 590 817
- GB-A- 807 442
- GB-A- 2 179 643
- US-A- 4 732 296

## Description

There is known a headed rod member aligning and supplying apparatus which is constructed to align headed rod members, such as screws, in a manner that their heads are positioned in the same orientation for supplying the aligned headed rod members one by one. This apparatus is used for automatically feeding screws or the like to an air driver or some other power tool. In the headed rod member aligning and supplying apparatus as presently used, a large number of headed rod members such as screws scattered in pieces are put in a bowl-like container. The container is constructed to be vibrated in a predetermined amount to let the headed rod members ascend in a helical track formed therein. An attachment member mounted on the middle of the track aligns headed rod members in the track by steadying the unstably positioned headed rod members passing through it and removing ones which are positioned more unstably.

As the above-described aligning and supply apparatus of headed ROD members aligns scattered headed rod members, automatic supply of screws or the like to an air driver or some other power tools is possible. Nevertheless, in this apparatus, the form of the attachment member and its position and posture in attaching it to the container heavily depend on experience and skill and a skilled technician is needed to align a large quantity of headed rod members stably.

GB-A-2 179 643 describes a headed rod member aligning and supplying apparatus according to the preamble of claim 1. In this apparatus, a brush member is oscillatingly arranged so as to remove screws in an abnormal position on the upper surface of said chute.

Accordingly, the present invention aims to provide a headed rod member aligning and supplying apparatus for aligning a large quantity of headed rod members stably without relying on a skilled technician.

According to the present invention, there is provided a headed rod member aligning and supplying apparatus adapted to align headed rod members, such as screws, in a manner such that their heads are positioned in a line and with the same orientation for supplying the headed rod members one by one from the line, comprising a container to receive a large number of headed rod members; an elongated chute having a portion inserted into the container and a top surface which is formed with a groove of a width being larger than a shank diameter of one of the headed rod members, but smaller than a head diameter and of a sufficient depth to receive a shank therein; moving means for effecting relative movement between the container and the chute to move both the container and the chute between a first position in which the bottom surface of the container and the top surface of the chute meet and a second position in which the top surface of the chute rises to a predetermined height from the bottom surface of the container, whereby in the first position, the shanks of a plurality of headed rod members are received in the chute groove from the container in which a large number of headed rod members are contained, whereby the shanks of the plurality of headed rod members are contained in the chute groove, and the container or the chute is moved by the moving means to take the second position in which the top surface of the chute is raised from the bottom surface of the container, characterised in that the apparatus further comprises an air nozzle positioned to be directed towards the top surface of the chute to blow off headed rod members lying fallen without getting into the groove of the chute, whereby in the second position, the air nozzle blows off the headed rod members lying fallen on the top surface of the chute to retain only the aligned headed rod members in a row being left in the groove.

In this invention, the chute may be connected to a feed member which extends to escapement means which separates and feeds the aligned headed rod members one by one, and a second air nozzle also may be provided for blowing off air onto the top surface of the chute so as to send the headed rod members aligned in a row in the groove to the feed member.

The present invention is described further by way of example only in the accompanying drawings, in which:

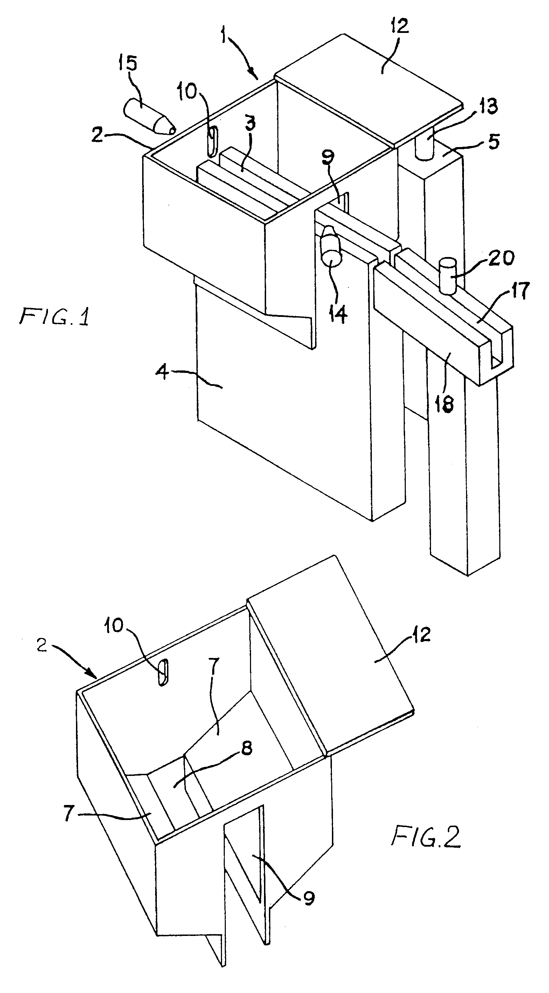

Figure 1 is a perspective view of a headed rod member aligning and supplying apparatus according to the present invention;
Figure 2 is a perspective view of a container;
Figures 3a and 3b show the container and a chute in the first position and in the second position, respectively;
Figure 4 is a plan view of the aligning and supplying apparatus prior to aligning screws in a row in the chute;
Figure 5 is a plan view of the aligning and supply apparatus in which a screw lying fallen is blowN off from the chute and
Figure 6 is a plan view of the aligning and supplying apparatus in which aligned screws have been fed to a feed member.

For the sake of convenience, headed rod members are represented by screws in the following description but it does not matter if they are T-studs, nails, blind rivets or the like. The aligning and supplying apparatus 1 for screws as headed rod members comprises a container 2 to contain a large number of screws scattered in pieces, an elongated chute 4 having a portion inserted into the container and a top surface which is formed with a groove 3 of a diameter being larger than a screw shank but smaller than a screw head and of a sufficient depth for receiving the shank therein, and a piston-cylinder device 5 as moving means for effecting relative movement between the container 2 and the chute 4 to move them to each other between a first position in which the bottom surface of the container and the top surface of the chute meet and a second position in which the top surface of the chute rises to a predetermined height from the bottom surface of the container.

The container 2 is described in the following, referring also to Figure 2. The container 2 is formed as a box opening at its top to store a large number of screws. The centre of a bottom surface 7 is provided with an opening 8 to receive the chute 4. The bottom surface 7 inclines downwardly from side surfaces of the opening 8 so that stored screws can move towards the opening 8 due to gravity.

Corresponding with the chute 4 which is received in the opening 8 of the bottom surface 7, a slot 9 is formed on the side so that an outlet portion of the chute 4 exists from the container 2. Further, the side opposite to the slot 9 is formed with a slit 10 at a position corresponding to the groove 3 of the chute 4. One of the side edges of the container 2 extends crossways, and an extended portion 12 is connected with a piston rod 13 of the piston-cylnder device 5.

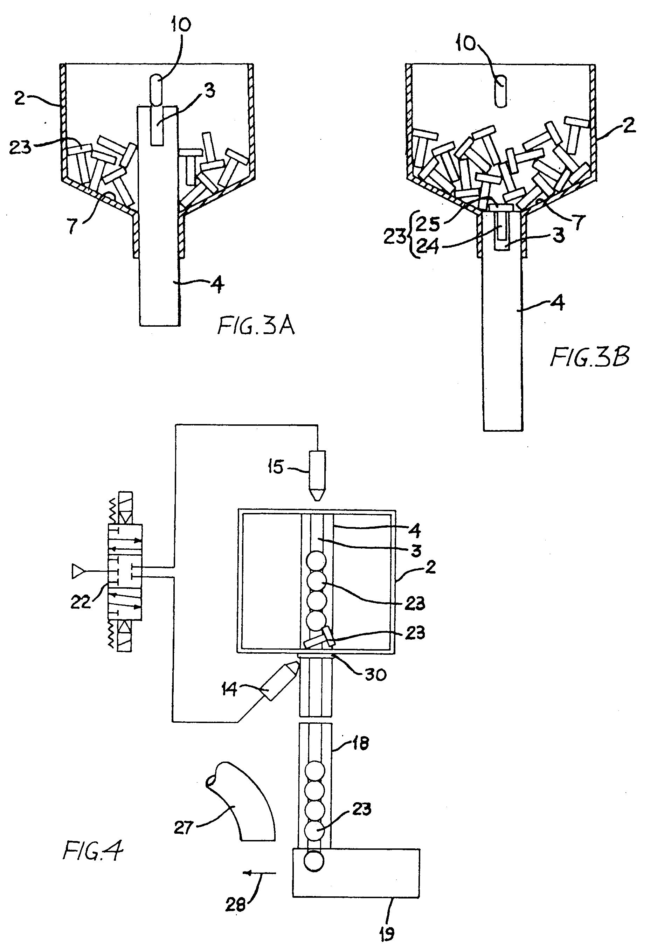

The chute 4 is made into an elongated shape so as to form the elongated groove 3 and is also formed in a plate-configuration so as to be received in the opening 8 of the container 2. The piston-cylinder device 5 moves the container 2 and chute 4 to each other between a first position in which the bottom surface 7 of the container and the groove 3 on the top surface of the chute meet and a second position in which the groove 3 of the chute rises to a predetermined height from the bottom surface 7 of the container. In this embodiment, the chute 4 is fixed and an extended portion 12 of the container 2 is connected to the piston rod 13 of the piston-cylinder device 5 so that the container 2 can be moved up and down. Alternatively, the container 2 may be fixed and the chute 4 may be moved. It is also possible to move both the container 2 and the chute 4. The first position and the second position referred to in the above, are described in the following, with reference to Figure 3a which shows the second position to which the groove 3 of the chute is raised, a predetermined height from the bottom surface 7 of the container, while Figure 3b shows the first position in which the bottom surface 7 of the container and the groove 3 on the top surface of the chute meet.

The aligning and supplying apparatus 1 is equipped with a first air nozzle 14 to blow off air to the groove 3 of the chute 4 so as to blow off headed rod members lying fallen without getting in the groove 3 of the chute 4. In order to send the screws aligned in the chute groove 3 to the outlet portion of the chute 4, a second air nozzle 15 is provided to blow off air from the outside of the container 2 via the slit 10 to the chute groove 3. In the outlet portion of the chute 4, an elongated feed member 18 is formed with a groove 17 which is similar to the chute groove 3. As shown in Figures 4 through 6, the feed member 18 extends to an escapement device 19 to separate and feed the aligned screws one by one. In the predetermined position of the feed member 18, a sensor 20 is positioned to detect the screws in the groove 17 so that the sensor detects the screws being fed to the escapement device 19. As shown in Figures 4 through 6, the first air nozzle 14 and the second air nozzle 15 are controlled to change their direction or to stop by a 3-position directional control valve 22.

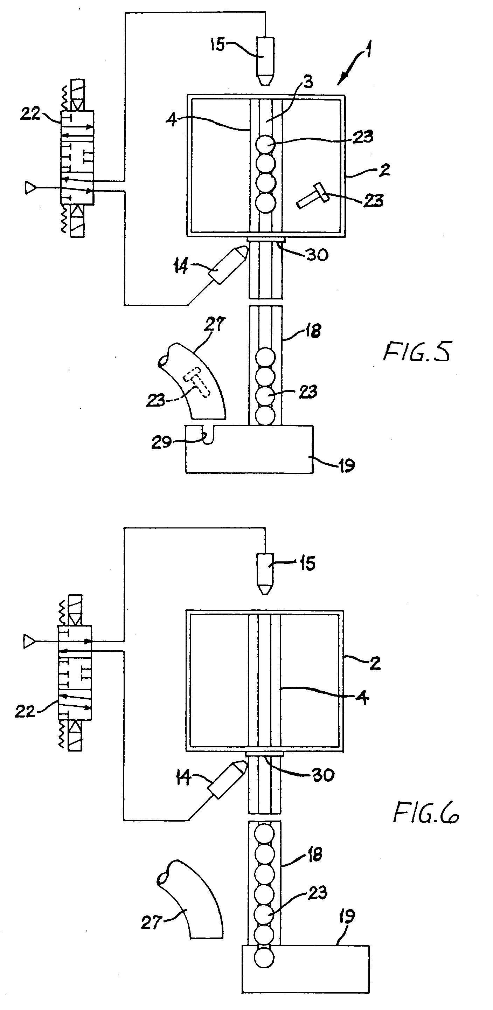

How screws are aligned in a manner that their heads are positioned in the same direction by means of the aligning and supply apparatus 1 constructed as stated above will now be described with reference to Figures 3a and 3b, 4, 5 and 6. As shown in Figure 3a, a large number of screws 23 are stored in the container, scattered in pieces, in the second position in which the chute groove 3 is at a predetermined height from the bottom surface 7 of the container. Then, the piston-cylinder device 5 is actuated to raise the container 2 to the first position in which the bottom surface 7 of the container and the groove 3 on the top surface of the chute meet as shown in Figure 3b. In the first position, the many screws 23 move along the slopes of the bottom surface 7 of the container towards the chute groove 3. The shanks 24 of the screws 23 are received in the chute groove 3 and their heads 25 are brought into engagement with the top of the groove so that the screws are suspended by the groove. Thus, the screws 23 are aligned in a row in the groove 3 with their heads being positioned in the same orientation. When the shanks of the plurality of screws 23 stay in the groove 3, the container 2 is brought down by the piston-cylinder device 5 to the second position (Figure 3a). As shown in Figure 4, however, some screws lie fallen on the top surface of the chute as their shanks have failed to get in the groove 3 of the chute 4. Therefore, as shown in Figure 5, the directional control valve 22 is actuated in the second position to feed air to the first air nozzle so that the screw lying fallen on the top surface of the chute 4 can be blown off. This allows only the aligned screws to be left in the groove 3.

After a large number of screws are aligned in the chute 4 as described above, the directional control valve 22 is actuated to stop feeding air to the first air nozzle 14 and instead, to supply air to the second air nozzle 15 for feeding the aligned screws to the feed member 18. The feeding may be carried out by sloping the chute 4 instead of feeding air as done by the second air nozzle. The screws transferred to the feed member 18 are detected by the sensor 20 and the feeding of the screws if forwarded to the escapement device 19. The escapement device 19 receives the screw at the head of the line into a recess as shown in Figure 4 to move to a feed tube 27 as indicated by the arrow. In the position shown in Figure 5, the screw is vacuum-sucked from the recess 29 of the escapement device 19 to the feed tube 27 and is directly fed to a power tool such as a pneumatic screw driver. Then, as shown in Figure 6, the escapement device 19 returns to receive the screw at the head of the aligned screws again to send the lead screw to the feed tube 27 in accordance with the demand from the power tool. When all the aligned screws in the feed member 18 have been sent out, the screw aligning operation is repeated on the chute 4. As shown in Figures 4 through 6, the chute 4 may be provided with a gate 30 in a portion just out of the container 2 for separating the work of aligning screws from the feeding of aligned screws to the feed member.

Thus, an aligning and supplying apparatus which is made up of components of simple structures but is capable of aligning the headed rod members reliably without requiring a skilled technician is provided. Therefore, it is possible to mass-produce the headed rod member aligning and supplying apparatus to align a large quantity of headed rod members stably without relying on a skilled technician.

## Claims

1. A headed rod member aligning and supply apparatus adapted to align headed rod members such as screws in a manner such that their heads are positioned in a line with the same orientation for supplying the headed rod members one by one from the line, comprising a container (2) to receive a large number of headed rod members (23), an elongated chute (4) having a portion inserted into the container and a top surface which is formed with a groove (3) of a width being larger than a shank diameter of a headed rod member (23) but smaller than a head diameter and of a sufficient depth to receive a shank therein, moving means for effecting relative movement between the container (2) and the chute (4) to move both the container and the chute between a first position in which the bottom surface of the container and the top surface of the chute meet and a second position in which the top surface of the chute rises to a predetermined height from the bottom surface of the container, whereby in the first position the shanks of a plurality of headed rod members are received in the chute groove from the container in which a large number of headed rod members are contained and whereby the shanks of the plurality of headed rod members are contained in the chute groove, and the container or the chute is moved by the moving means to take the second position in which the top surface of the chute is raised from the bottom surface of the container, characterised in that the apparatus further comprises an air nozzle (14) positioned to be directed toward the top surface of the chute to blow off headed rod members lying fallen without getting into the groove of the chute, whereby in the second position, the air nozzle (14) blows off the headed rod members lying fallen on the top surface of the chute to retain only the aligned headed rod members in a row being left in the groove.

2. The aligning and supplying apparatus according to Claim 1, characterised in that the chute is connected to a feed member (18) which extends to escapement means (19) which separates and feeds the aligned headed rod members one by one, and a second air nozzle (15) is provided for blowing off air onto the top surface of the chute so as to send the headed rod members aligned in a row in the groove to the feed member.

## Patentansprüche

1. Eine Vorrichtung zum Ausrichten und Speisen von Stäben mit Kopf, geeignet zum Ausrichten von Stäben mit Kopf wie beispielsweise Schrauben, derart, daß deren Köpfe in einer Reihe mit der gleichen Ausrichtung angeordnet sind, um die Stäbe mit Kopf einzeln von der Reihe zu speisen, bestehend aus einem Behälter (2) zum Aufnehmen einer großen Anzahl von Stäben mit Kopf (23), einer länglichen Rutsche (4), die einen Abschnitt der in den Behälter eingesetzt ist und eine obere Fläche aufweist, welche mit einer Ausnehmung (3) ausgebildet ist die eine Weite aufweist, welche größer als ein Schaftdurchmesser eines Stabes mit Kopf (23), jedoch Kleiner als ein Kopfdurchmesser und von ausreichender Tiefe ist, um einen Schaft darin aufzunehmen, einer Bewegungseinrichtung zum Bewirken einer Relativbewegung zwischen dem Behälter (2) und der Rutsche (4), um den Behälter und die Rutsche zwischen einer ersten Position, in welcher die Bodenfläche des Behälters und die obere Fläche der Rutsche zusammenfallen, und einer zweiten Position zu bewegen, in welcher die obere Fläche der Rutsche sich auf eine vorbestimmten Höhe von der Bodenfläche des Behälters erhebt, so daß in der ersten Position die Schäfte einer Mehrzahl von Stäben mit Kopf aus dem Behälter, in welchem eine große Anzahl von Stäben mit Kopf aufgenommen sind, in der Rutschenausnehmung aufgenommen sind, und die Schäfte der Mehrzahl von Stäben mit Kopf in der Rutschenausnehmung enthalten sind, und der Behälter oder die Rutsche von der Bewegungseinrichtung bewegt wird, um die zweite Position einzunehmen, in welcher die obere Fläche der Rutsche von der Bodenfläche des Behälters angehoben ist,
**dadurch gekennzeichnet, daß**
die Vorrichtung weiter umfaßt: eine Luftdüse (14) die so positioniert ist, daß sie auf die obere Fläche der Rutsche zu richten ist, um die Stäbe mit Kopf fortzublasen, die liegengeblieben sind ohne in die Ausnehmung der Rutsche zu gelangen, so daß in der zweiten Position die Luftdüse (14) die Stäbe mit Kopf fortbläst, die auf der oberen Fläche der Rutsche liegengeblieben sind, um nur die ausgerichteten Stäbe mit Kopf in einer Reihe zurückzuhalten, die in der Ausnehmung gelassen sind.

2. Vorrichtung zum Ausrichten und Speisen nach Anspruch 1, dadurch gekennzeichnet, daß die Rutsche mit einem Speiseglied (18) verbunden ist, welches sich zu einer Hemmeinrichtung (19) erstreckt, welche die ausgerichteten Stäbe mit Kopf voneinander trennt und einzeln zuführt, und daß eine zweite Luftdüse (15) vorgesehen ist, um Luft auf die obere Fläche der Rutsche zu blasen, um die in einer Reihe in der Ausnehmung ausgerichteten Stäbe mit Kopf zu dem Speiseglied zu schicken.

## Revendications

1. Appareil de distribution et d'alignement d'organes à tige et à tête, adapté pour aligner des organes à tige et à tête tels que des vis de manière telle que leurs têtes soient disposées selon une ligne avec la même orientation pour fournir les organes à tige et à tête un par un depuis la ligne, comprenant un réceptacle (2) pour recevoir un grand nombre d'organes (23) à tige et à tête, une goulotte allongée (4) comprenant une partie insérée dans le réceptacle et une surface supérieure qui est formée avec une rainure (3) d'une largeur plus grande qu'un diamètre de tige d'un organe (23) à tige et à tête mais inférieure au diamètre de tête et d'une profondeur suffisante pour recevoir une tige dedans, des moyens de déplacement pour produire un mouvement relatif entre le réceptacle (2) et la goulotte (4) pour déplacer à la fois le réceptacle et la goulotte entre une première position dans laquelle la surface inférieure du réceptacle et la surface supérieure de la goulotte se rejoignent et une seconde position dans laquelle la surface supérieure de la goulotte s'élève à une hauteur prédéterminée depuis la surface inférieure du réceptacle, de sorte que dans la première position des tiges d'une pluralité d'organes à tige et à tête sont reçues dans la rainure de goulotte depuis le réceptacle dans lequel un grand nombre d'organes à tige et à tête sont contenus et de sorte que les tiges de la pluralité d'organes a tige et à tête sont contenues dans la rainure de goulotte, et le conteneur ou la goulotte est déplacée par les moyens de déplacement pour prendre la seconde position dans laquelle la surface supérieure de la goulotte est élevée depuis la surface inférieure du réceptacle, caractérisé en ce que l'appareil comprend en outre une buse d'air (14) positionnée pour être dirigée vers la surface supérieure de la goulotte pour évacuer les organes a tige et à tête qui sont tombés sans pénétrer dans la rainure de la goulotte de sorte que, dans la seconde position, la buse d'air (14) évacue les organes a tige et à tête qui sont tombés sur la surface supérieure de la goulotte pour retenir seulement les organes à tige et à tête alignés en une rangée laissée dans la rainure.

2. Appareil selon la revendication 1, caractérisé en ce que la goulotte est connectée à un organe de distribution (18) qui s'étend vers des moyens (19) d'échappement qui séparent et distribuent les organes à tige et à tête un par un, et en ce qu'une seconde buse d'air (15) est prévue pour souffler de l'air sur la surface supérieure de la goulotte de manière à envoyer les organes à tige et à tête alignés en une rangée dans la rainure vers l'organe de distribution.
